# EUROPEAN PATENT SPECIFICATION

(11) **EP 1 142 223 B1**
(45) Date of publication and mention of the grant of the patent: **24.02.2010**
(21) Application number: 99963811.7
(22) Date of filing: 07.12.1999
(51) Int. Cl.: H04L 12/56, H04W 28/00

(54) **FILTERING OF IP-PACKET TRAFFIC IN GPRS**
FILTERN EINES IP-PAKETVERKEHRS IN EINEM GPRS-SYSTEM
FILTRAGE D'UN TRAFIC DE PAQUETS-IP DANS UN SYSTEME GPRS

(30) Priority: 15.12.1998 SE 9804326
(43) Date of publication of application: 10.10.2001
(73) Proprietor: TELIASONERA AB, 106 63 Stockholm (SE)
(72) Inventor: MALMKVIST, Jonas, S-142 62 Trangsund (SE)
(74) Representative: Hopfgarten, Nils
(86) International application number: PCT/SE1999/002279
(87) International publication number: WO 2000/036793

(56) References cited:
- EP-A2- 0 632 672
- WO-A1-99/05828
- WO-A1-99/16266
- WO-A1-99/33301

## Description

### TECHNICAL FIELD

The invention describes a way to filter packet traffic whereby the user will have a chance to make quality requirements on the packet traffic so that quality parameters can be indicated for the client applications that are utilised.

The invention provides functionality that makes it possible for the user himself/herself to decide how large part of the allocated total resources that shall be used for each client application.

The invention especially describes a way to filter packet traffic in GPRS (General Packet Radio Service), which is a packet switching data service for GSM. With only minor additions to phase 1 of the GPRS-standard, the invention will give the user a considerably better experienced quality. Client applications that are less sensible to delays, for instance file transmissions with FTP (File Transfer Protocol), can give of the common capacity to delay-sensitive client applications, for instance "Voice over IP", with UDP (User Datagram Protocol).

### PRIOR ART

EP 0 632 672 describes a system and method for ensuring transmission of data elements between computers at a predetermined quality of service, QoS. A computer in a reference model communication network then requests a preselected QoS for selected transmissions. An existing session is employed whereby transmissions having a variety of preselected guarantees are multiplexed onto the existing session.

GPRS (General Packet Radio Service) is a packet switched data service for GSM, and in the first place constitutes a mobile Internet access, but can also create access to other packet switched data networks, such as X.25. The GPRS system is connected to the data network via a GGSN (Gateway GPRS Support Node). IP-packets, which are coming to GGSN, will be tunnelled to the mobile station via a fixed network and a radio based network.

According to the GPRS-standard, all IP-packets that have the same IP-address will be associated with a PDP-context, which is in the mobile terminal, SGSN and GGSN. PDP-context is a register, which inter alia contains a QoS-profile (quality profile) for the IP-access of the terminal, and information that is required for changing location of the terminal within the GSM-network (information for mobility). The quality profile inter.alia describes which maximal bandwidth that is available to the user, and requirements on maximal delay. This means that all IP-packets with the same IP-address will be managed in the same way, irrespective of the varying requirements on delay that the client applications make on the GPRS carrier.

The need to make quality requirements (QoS) is well known. QoS is managed in a lot of protocols, but management of QoS for IP-traffic on Internet is not solved.

A client application can be carried by different types of transport protocols. A client application that requires that information is delivered correctly and in the same order as it was transmitted uses TCP (Transmission Control Protocol), and a client application that instead has more strict delay requirements uses UDP (User Datagram Protocol).

### TECHNICAL PROBLEM

If a user utilises a plurality of client applications, the requirements on QoS can differ between the different client applications that the user has activated. Use of client applications where packet switched transmission is utilised can by that result in differentiated requirements on the transmission. For instance use of certain client applications makes strict requirements on rapid transmission, whereas use of other client applications may make requirements on that the transmitted packets shall arrive in the same order as they were transmitted.

Phase 1 of the standard for General Packet Radio Service (GPRS) does not support quality differentiation of IP-packets that have the same IP-address. This means that all IP-protocols that have the same IP-address will share a common transmission capacity, and the allocation can not be controlled with regard to which requirements that are made. This means inter alia that client applications which do not have strict requirements on delays can reduce the quality for delay-sensitive client applications.

When control of the transmission with regard to quality can not be made, activation/use of certain client applications are at the same time prevented or influenced. Wanted parallel execution then can be impossible, so sequential execution, or in another way restricted execution, must be client-applied.

To base the QoS-management on that a user can be allocated a plurality of IP-addresses, according to GPRS phase 1, is insufficient primarily for two reasons:
- There is a great shortage of IPv4-addresses, which strongly reduces the possibility for a user to use an IP-address for each client application.
- Workplace equipment (PC) is normally not configured to support a plurality of IP-addresses at the same time.

### TECHNICAL SOLUTION

The above discussed problems related to GPRS transmssions are solved according to the invention by a packet filter according to claim 1 and by a method according to claim 7.

IP-packets that are transmitted over GPRS are thus encapsulated and tunnelled through the connecting network. The invention describes how the IP-packets that are tunnelled over the GPRS-carrier, are arranged to pass a packet filter, which reduces the amount of data that each client application is allowed to transmit. The user can by the filtering himself/herself decide how much of the available bandwidth that shall be used for each client application.

The invention can be implemented in mobile terminals that are using a GPRS-carrier for connecting themselves to the Internet. The invention also can be implemented in the GGSN-nodes of the GPRS-system.

### ADVANTAGES

The invention provides functionality which makes it possible for the user himself/herself to decide how large part of the to the user allocated total resources that shall be used for each client application.

Available network resources can be allocated between those client applications that are activated, so that the sensible client applications will have the capacity that is necessary for satisfactory transmission. Other, less sensible, client applications will have access to limited resources. Since the requirements are smaller for these client applications, they are less harassed by the capacity being limited or varied. If, on the other hand, a client application does not utilise allocated capacity in full, the free capacity will be allocated to any other client application that has possibility to benefit by increased transmission capacity. The user then will experience a totally improved quality of the transmission.

The described packet filter for QoS-management in the GPRS-system introduces a new technology to differentiate and prioritise between different client applications. By prioritizing and differentiation in the IP-traffic, a more flexible system for transmission and better chances to fulfil time and quality requirements is effected so that client applications can be satisfactorily utilised. By these arrangements, network resources can be utilised in a better way, and there will be possibilities to avoid or postpone investments.

### LIST OF FIGURES

Figure 1 shows access to the Internet by GPRS.
Figure 2 shows a mobile terminal connected to the Internet via a GPRS-carrier.
Figure 3 shows four client applications that share common transmission capacity.

### EXPLANATION OF TERMS

- FTP: (File Transfer Protocol) Ordinary file transport protocol on the Internet.
- GGSN: (Gateway GPRS Support Node) Node in the GSM-network that connects the fixed network part of GPRS with the Internet.
- GPRS: (Generalised Packet Radio Service). Packet switched data service for GSM.
- GSM: Global System for Mobile communication.
- IPv4-addresses: Address in the Internet according to the standard for IP-protocol version 4.
- MSC: (Mobile Switch Center). Switching node in mobile networks with functions in the first hand for change of base.
- PDP-context: Register with information about inter alia QoS and information necessary to make mobility possible.
- PDP-address: The address that is indicated by GPRS. In the case with connection via Internet, PDP-address = IP-address, but can also be another address, for instance X.25-address.
- QoS: (Quality of Service) Parameters that define wanted performance.
- SGSN: (Serving GPRS Support Node). Node in the GSM-network that manages data packets from mobile telephone.
- TCP: (Transport Control Protocol). Protocol, which frequently is used when high requirements are made on that the information is delivered correctly and in the same order as it was transmitted.
- Tunnel,: A technology which means that data
- Tunnelling: packets can be encapsulated so that they can be transmitted to a destination without being influenced by protocols between them.
- UDP: (User Datagram Protocols). Protocols, which are frequently used when high requirements are made on that the delay is limited.

### DETAILED DESCRIPTION

The description below refers to the figures in the enclosed appendix of drawings.

### GPRS

Packet data traffic over a GSM-network is effected by GPRS (1) (Generalised Packet Radio Service). GPRS supports standard protocols and co-operates with packet switched networks such as IP-networks and X.25-networks. Both intermittent and burst transmissions, and single transmissions with large amounts of data, are managed. GPRS is realised by two types of nodes in the GSM-network: GGSN (2) (Gateway GPRS Support Node) and SGSN (3) (Serving GPRS Support Node). These nodes are on the same hierarchical level as MSC in the GSM-network.

SGSN (3) keeps count of the location of the mobile telephone within its service area, transmits and receives data packets from the mobile telephone, forwards them or receives them from GGSN. Co-operation with external packet data networks is made by GGSN, which converts the GSM-packets to other packet protocols (for instance IP or X.25) and transmits the GSM-packets to other communication - networks.

A mobile terminal (5) logs on to the data network, for instance Internet (4), separately for GPRS. After that, a PDP-context (6) is established, which is a logic connection between the mobile telephone and GGSN. PDP-context can be described as being represented by registers in the mobile terminal, SGSN and GGSN. The registers inter alia contain information regarding QoS, security and such information that is needed to effect mobility, such as information about base stations (7, 9) etc. The mobile terminal is identified from the packet data network by means of a PDP-address. Each such PDP-address is described in the individual representations of PDP-context (6) in the mobile terminal (5), SGSN (3) och GGSN (2). When this is made, the mobile terminal is visible outside the network where the mobile terminal is logged in, for instance Internet (4) and can by that transmit and receive packets.

At establishing connection towards Internet (4), a "tunnel" is established through GPRS from GGSN and to the mobile terminal. The traffic in the tunnel can be controlled by the subscription that the user utilises for the communication. QoS-requirements will be decided and constant for all packets to same PDP-address by this subscription.

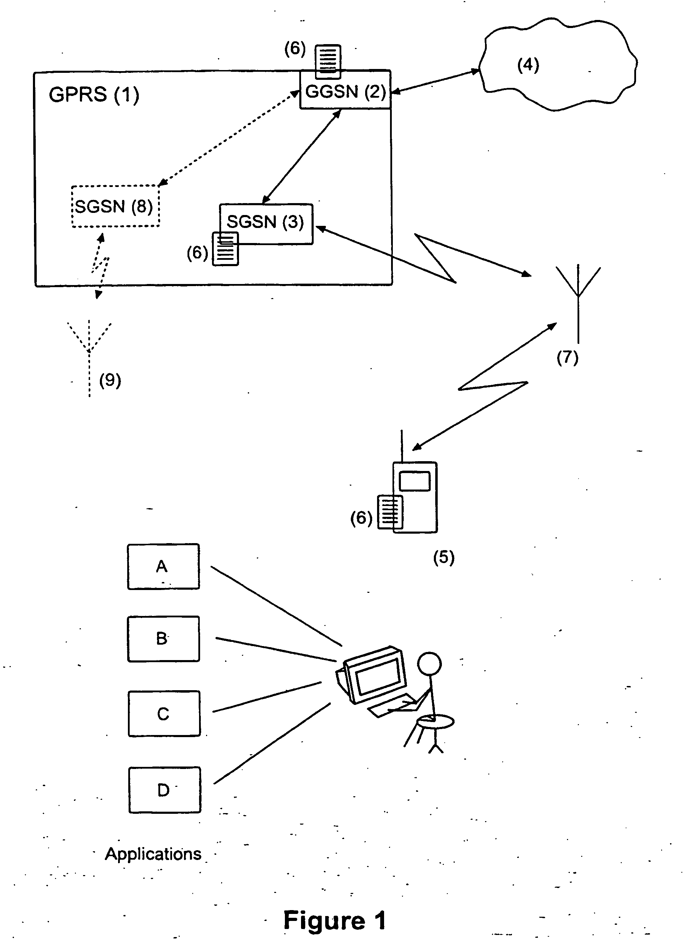

PDP-context contains inter alia information about quality aspects and information that is necessary to make possible mobility. PDP-context is represented in the mobile terminal, SGSN and GGSN. The connection from mobile terminal via base station and SGSN to GGSN is registered in PDP-context. When the mobile terminal is moved during session in progress, change of base can be made. This then also results in that the connection of the mobile terminal to SGSN is changed, which is illustrated by dashed lines in Figure 1 (SGSN 8 and base station 9). Information to make it possible to perform such changes is in the PDP-context (6).

### THE LOCATION OF THE PACKET FILTER

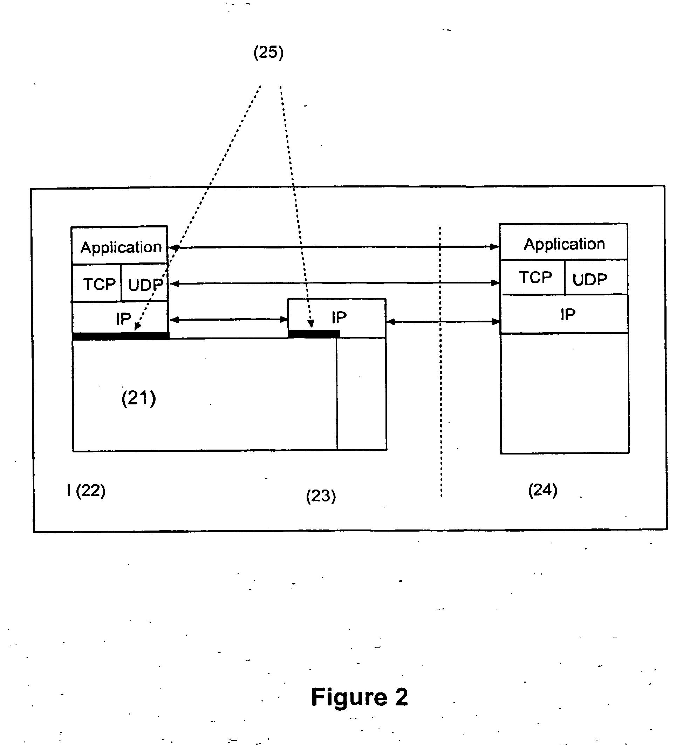

Figure 2, which shows the protocol stacks on the mobile working place (22), in GGSN (23) and in the receiving data network (24), describes the location of the packet filtering in the communication. IP-packets that are transmitted over GPRS are encapsulated and tunnelled through the connecting network (GPRS-carrier 21) between the mobile station and GGSN. A packet filter (25) is located in the protocol stack between the IP-layer (25) and the GPRS-carrier (21). In Figure 2, the packet filter can be seen as a black-marked area in the lower part of the IP-layer. By that, the IP-packets will pass the packet filter before the tunnelling over the GPRS-carrier. By the filter the amount of data that a client is allowed to transmit is restricted so that the packets are allocated the priority in the transmission that the user has requested. The user can in that way by the filtering himself/herself decide how much of the available bandwidth that shall be used for each client application.

### PREFERRED EMBODIMENT

The packet filter consists of the following logical units:
- **The packet classifier,** which sorts the incoming traffic according to predefined information in the IP-packet.
- **The counter,** which registers and compares the number of incoming IP-packets belonging to the same client application with a predefined profile.
- **The flow limiter,** which throws the IP-packets that exceed the for the client application maximally allowed number of IP-packets per time unit (the bandwidth).

Defining filter functions for a client application means that:
- the user describes how the IP-packets from the client application are identified.

In the first place, identification of transport protocols (for instance TCP or UDP) and port numbers, are used, but when necessary, other information from higher protocol layer is utilised.
- the user decides which bandwidth each client application is allowed to use.
- the user decides rules for how the packet filter shall allocate the transmission capacity that a client application for the time being does not utilise.

### THE UTILISATION OF THE BANDWIDTH

If a client application does not utilise the whole - allocated bandwidth, another client application is given access to extra bandwidth.

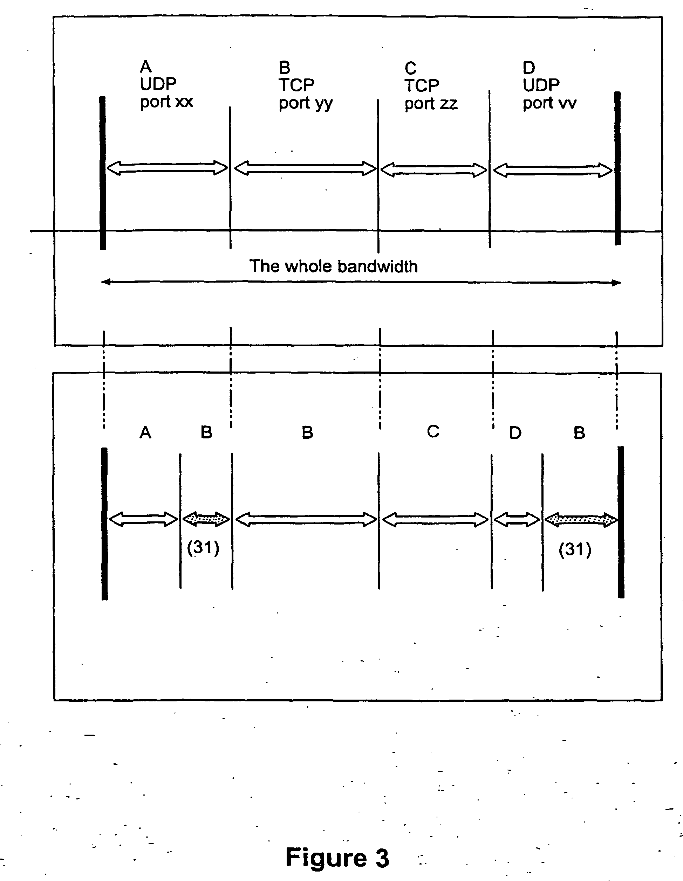

Figure 3 shows an example of the utilisation of the bandwidth.

In the upper picture of the Figure is shown how the totally available bandwidth is allocated between four client applications (A, B, C and D), two (B and C) that utilise the TCP-protocol, and two (A and D) that utilise the UDP-protocol. Suppose that the TCP-application B is allowed to use also the transmission capacity that has been allocated to the UDP-applications A and D during the time when the UDP-applications do not utilise the whole bandwidth. -

In the lower picture is shown an example where the client application A and D do not utilise the whole allocated bandwidth, at which the client application B can be allocated a certain extra transmission capacity (31).

In this way the available bandwidth will be better utilised, and in the example no transmission capacity will be left unutilised. The user experiences that the client applications A and D will have the capacity that is necessary, at the same time as the client application B will have increased capacity in addition to the initially allocated.

The invention is not limited to above described embodiments but may in addition be subject to modifications within the frame of the following patent claims.

## Claims

1. A packet filter for management of quality parameters at packet switched data transmissions to and from different client applications (A, B, C, D),
**characterised in that**, for packet traffic transmitted over mobile telephone networks by utilisation of GPRS, said filter is adapted to restrict the amount of data that a client is allowed to transmit to make quality requirements, relating to at least bandwidth or delay, on the packet traffic separately for each of said client applications (A, B, C, D), for traffic over IP-networks and/or over X. 25-networks, by deciding by the filtering how much of available bandwidth shall be used for each client application,**in that** the packet traffic is executed according to the IP-protocol and **in that** the filter is located in the protocol stack between the IP-layer (25) and GPRS-carrier (21) so that the IP-packets will pass the filter before the transmission, executed by the GPRS-carrier (21).

2. A packet filter as claimed in claim 1,
**characterised in that** the transmission protocols that are used in Internet are TCP, Transport Control Protocol, and UPD, User Datagram Protocols.

3. A packet filter as claimed in claims 1 or 2,
**characterised in that** the filter is adapted to differentiate QoS for IP-traffic on Internet for different client applications with the same ZP-address.

4. A packet filter as claimed in any of claims 1 to 3,
**characterised in:**
**that** the amount of data, that each of said client applications (A, B, C, D) is allowed to transmit, is limited;
**that** transmission capacity (31), that has been allocated to any of said client applications but not been utilised, is allocated to any other of said client applications;
**that** allocation between said client applications of the available bandwidth is decided at the utilisation of the client applications.

5. A packet filter as claimed in any of claims 1 to 4,
**characterised by** the following elements:
a packet classifier, which sorts the incoming traffic according to information in transmitted packets,
a counter, which registers and compares the number of incoming packets belonging to the same client application with a predefined profile, and
a flow limiter, which rejects packets so that the number of packets per time unit, which is allowed for the client application to which the packet relates, does not exceed an allowed maximum number of packets per time unit.

6. A packet filter as claimed in any of claims 1 to 5,
**characterised in that** filter functions for a client application are defined by:
a description of how packets, which are transmitted, are identified.
allocation of bandwidth for each client application.
control of allocation of transmission capacity that temporarily is not utilised.

7. A method for filtering of packet switched data transmissions to make quality requirements on packet traffic separately for each one of active client applications (a, B, C, D), **characterised in that**, for packet traffic transmitted over mobile telephone networks by utilisation of GPRS, the packet traffic is executed according to the IP-protocol, and **in that** the filtering is made by a packet filter adapted to restrict the amount of data that a client is allowed to transmit to make quality requirements, relating to at least bandwidth or delay, on the packet traffic separately for each of said client applications (A, B, C, D), for traffic over IP-networks and/or over X.25-networks, by deciding by the filtering how much of available bandwidth shall be used for each client application, and **in that** said packet filter is located in the protocol stack between the IP-layer (25) and the layer with GPRS-carrier (21), so that the IP-packets will pass the filter before the GPRS transmission.

8. A method as claimed in claim 7,
**characterised in that** differentiated quality requirements are made on traffic in IP-networks and/or in X.25-networks.

9. A method as claimed in claims 7 or 8,
**characterised in that** said packet filter comprises the following elements:
a packet classifier, which sorts the traffic according to information in transmitted packets,
a counter, which for each of said client applications registers and compares the number of transmitted packets belonging to said client application with a predefined profile, and
a flow limiter, which limits the packet flow for a client application to a maximum allowed number of packets per time unit.

10. A method as claimed in any of claims 7 to 9,
**characterised by** dynamic allocation of transmission capacity between said client applications.

11. A method as claimed in any of claims 7 to 10,
**characterised in:**
**that** the amount of data that each of said client applications (A, B, C, D) is allowed to transmit is restricted,
**that** transmission capacity (31), which is allocated to one of said client applications, but not utilised, is allocated to any other of said client applications,
**that** the user dynamically decides how the utilisation of the available bandwidth shall be allocated between said client applications.

12. A method as claimed in any of claims 7 to 11,
**characterised in:**
identification of packets from said client applications,
allocation of bandwidth to each of said client applications, and
control of allocation of transmission capacity that momentarily is not utilised.

## Patentansprüche

1. Paketfilter für Verwaltung von Qualitätsparametern bei Paketvermittlungsdatenübertragungen zu und von unterschiedlichen Klientanwendungen (A, B, C, D), **dadurch gekennzeichnet, dass** für Paketverkehr, der über mobile Telefonnetze durch Verwendung von GPRS übertragen wird, der Filter dazu ausgebildet ist, die Datenmenge zu beschränken, die einem Klient zu übertragen erlaubt ist, um Qualitätsanforderungen, die sich wenigstens auf Bandbreite oder Verzögerung beziehen, an den Paketverkehr getrennt für jede der Klientanwendungen (A, B, C, D) für Verkehr über IP-Netze und/oder über X.25-Netze zu machen, indem durch die Filterung entschieden wird, wie viel von zur Verfügung stehender Bandbreite für jede Klientanwendung benutzt werden soll, dass der Paketverkehr gemäß dem IP-Protokoll durchgeführt wird und dass der Filter in dem Protokollstapel zwischen der IP-Schicht (25) und dem GPRS-Träger (21) angeordnet ist, so dass die IP-Pakete vor der Übertragung, die durch den GPRS-Träger (21) durchgeführt wird, durch den Filter hindurchgehen.

2. Paketfilter nach Anspruch 1, **dadurch gekennzeichnet, dass** die Übertragungsprotokolle, die im Internet benutzt werden, TCP, Transportkontrollprotokoll, und UPD, Benutzerdatagrammprotokolle, sind.

3. Paketfilter nach Anspruch 1 oder 2, **dadurch gekennzeichnet, dass** der Filter dazu ausgebildet ist, QoS (Qualität des Dienstes) für IP-Verkehr auf dem Internet für unterschiedliche Klientanwendungen mit derselben IP-Adresse zu unterscheiden.

4. Paketfilter nach einem der Ansprüche 1 bis 3, **dadurch gekennzeichnet, dass** die Datenmenge, die jede der Klientanwendungen (A, B, C, D) zu übertragen erlaubt ist, begrenzt;
dass Übertragungskapazität (31), die irgendeiner der Klientanwendungen zugeteilt ist, jedoch nicht benutzt worden ist, irgendeine anderen der Klientanwendungen zugeteilt wird;
dass Zuteilung der zur Verfügung stehenden Bandbreite unter den Klientanwendungen bei der Verwendung der Klientanwendungen entschieden wird.

5. Paketfilter nach einem der Ansprüche 1 bis 4, **gekennzeichnet durch** die folgenden Elemente:
einen Paketklassifizierer, der den ankommenden Verkehr gemäß Information in übertragenen Paketen sortiert,
einen Zähler, der die Anzahl von ankommenden Paketen, die zur selben Klientanwendung mit einem vorbestimmten Profil gehören, registriert und vergleicht, und
einen Durchflussbegrenzer, der Pakete zurückweist, so dass die Anzahl von Paketen pro Zeiteinheit, die für die Klientanwendung erlaubt ist, auf die sich das Paket bezieht, nicht eine erlaubte Maximalanzahl von Paketen pro Zeiteinheit übersteigt.

6. Paketfilter nach einem der Ansprüche 1 bis 5, **dadurch gekennzeichnet, dass** Filterfunktionen für eine Klientanwendung definiert sind durch
eine Beschreibung, wie Pakete, die übertragen werden, identifiziert werden,
Zuteilung von Bandbreite für jede Klientanwendung,
Steuerung der Zuteilung von Übertragungskapazität, die zeitweilig nicht benutzt wird.

7. Verfahren zum Filtern von Paketvermittlungsdarenübertragunden, um Qualitätserfordernisse an Paketverkehr getrennt für jede der aktiven Klientanwendungen (A, B, C, D) zu machen, **dadurch gekennzeichnet, dass** für Paketverkehr, der über mobile Telefonnetze unter Verwendung von GPRS übertragen wird, der Paketverkehr gemäß dem IP-Protokoll durchgeführt wird, und dass die Filterung durch einen Paketfilter vorgenommen wird, der dazu ausgebildet ist, die Datenmenge einzuschränken, die ein Klient zu übertragen erlaubt ist, um Qualitätserfordernisse, die sich auf wenigstens Bandbreite oder Verzögerung beziehen, an dem Paketverkehr getrennt für jede der Klientanwendungen (A, B, C, D) für Verkehr über IP-Netzen und/oder X.25-Netzen zu machen, indem durch die Filterung entschieden wird, wie viel von zur Verfügung stehender Bandbreite für jede Klientanwendung benutzt werden soll, und dass der Paketfilter in dem Protokollstapel zwischen der IP-Schicht (25) und der Schicht mit dem GPRS-Träger (21) angeordnet ist, so dass die IP-Pakete durch den Filter vor der GPRS-Übertragung hindurchgehen.

8. Verfahren nach Anspruch 7, **dadurch gekennzeichnet, dass** differenzierte Qualitätserfordernisse auf Verkehr in IP-Netzen und/oder in X,25-Netzen gemacht werden.

9. Verfahren nach Anspruch 7 oder 8, **dadurch gekennzeichnet, dass** der Paketfilter die folgenden Elemente aufweist:
einen Paketklassifizierer, der den Verkehr gemäß der Information in übertragenen Paketen sortiert,
einen Zähler, der für jede der Klientanwendungen die Anzahl von übertragenen Paketen, die zu der Klientanwendung mit einem vorbestimmten Profil gehören, registriert und vergleicht, und
einen Flussbegrenzer, der den Paketfluss für eine Klientanwendung auf eine maximal erlaubte Anzahl von Paketen pro Zeiteinheit begrenzt.

10. Verfahren nach einem der Ansprüche 7 bis 9, **gekennzeichnet durch** dynamische Zuteilung von Übertragungskapazität zwischen den Klientanwendungen.

11. Verfahren nach einem der Ansprüche 7 bis 10, **dadurch gekennzeichnet:**
**dass** die Datenmenge, die jede der Klientanwendungen (A, B, C, D) zu übertragen erlaubt ist, eingeschränkt ist,
**dass** Übertragungskapazität (31), die einer der Klientanwendungen zugeteilt ist, jedoch nicht benutzt wird, eine anderen der Klientanwendungen zugeteilt wird,
das der Benutzer dynamisch entscheidet, wie die Verwendung der zur Verfügung stehenden Bandbreite zwischen den Klientanwendungen zugeteilt werden soll.

12. Verfahren nach einem der Ansprüche 7 bis 11, **gekennzeichnet durch**:
Identifizierung von Paketen von den Klientanwendungen,
Zuteilung von Bandbreite zu jeder der Klientanwendungen, und
Steuerung der Zuteilung von Übertragungskapazität, die momentan nicht verwendet wird.

## Revendications

1. Filtre de paquet destiné à assurer la gestion de paramètres de qualité au niveau de transmissions de données commutées par paquets vers différentes applications de client (A, B, C, D) et à partir de ces dernières,
**caractérisé en ce que,** pour un trafic par paquet transmis sur des réseaux de téléphone mobile en utilisant le GPRS, ledit filtre est adapté afin de limiter la quantité de données qu'un client est autorisé à transmettre afin d'atteindre des spécifications de qualité, en ce qui concerne au moins la bande passante ou le délai, sur le trafic par paquet, de manière séparée pour chacune desdites applications de client (A, B, C, D), pour un trafic sur des réseaux IP et/ou sur des réseaux X.25, en décidant par le filtrage combien de la bande passante disponible doit être utilisée pour chaque application de client, **en ce que** le trafic par paquet est exécuté selon le protocole IP et **en ce que** le filtre est situé dans la pile de protocole entre la couche IP (25) et la porteuse GPRS (21) de sorte que les paquets IP passent le filtre avant la transmission, exécutée par la porteuse GPRS (21).

2. Filtre de paquet selon la revendication 1,
**caractérisé en ce que** les protocoles de transmission qui sont utilisés sur Internet sont le protocole de commande de transport, TCP, et les protocoles de datagramme d'utilisateur UDP.

3. Filtre de paquet selon les revendications 1 ou 2, **caractérisé en ce que** le filtre est adapté de manière à différencier QoS pour un trafic IP sur Internet pour différentes applications de client avec la même adresse IP.

4. Filtre de paquet selon l'une quelconque des revendications 1 à 3, **caractérisé:**
**en ce que** la quantité de données, que chacune desdites applications de client (A, B, C, D) est autorisée à transmettre, est limitée;
**en ce que** la capacité de transmission (31), qui a été affectée à l'une quelconque desdites applications de client, mais n'a pas utilisée, est affectée à une autres quelconque desdites applications de client;
**en ce que** l'affectation entre lesdites applications de client, de la bande passante disponible est décidée au niveau de l'utilisation des applications de client.

5. Filtre de paquet selon l'une quelconque des revendications 1 à 4, **caractérisé par** les éléments suivants :
un élément de classement de paquet, qui trie le trafic entrant selon des informations dans des paquets transmis,
un compteur, qui enregistre et compare le nombre de paquets entrants appartenant à la même application de client à un profil prédéterminé, et
un limiteur de flux, qui rejette des paquets de sorte que le nombre de paquets par unité de temps, qui est autorisé pour l'application de client auquel le paquet se rapporte, n'excède pas un nombre maximum autorisé de paquets par unité de temps.

6. Filtre de paquet selon l'une quelconque des revendications 1 à 5,
**caractérisé en ce que** les onctions de filtre pour une application de client sont définies par :
une description de la manière par laquelle les paquets, qui sont transmis, sont identifiés,
l'affectation de la bande passante pour chaque application de client,
la commande d'affectation de la capacité de transmission qui n'est temporairement pas utilisée.

7. Procédé de filtrage de transmissions de données commutées par paquets de manière à atteindre des spécifications de qualité sur un trafic par paquet séparément pour chacune d'applications actives de client (A, B, C, D), **caractérisé en ce que**, pour le trafic par paquet transmis sur des réseaux de téléphone mobile, en utilisant le GPRS, le trafic par paquet est exécuté selon le protocole IP, et **en ce que** le filtrage est réalisé par un filtre de paquet adapté afin de limiter la quantité de données qu'un client est autorisé à transmettre de manière à atteindre des spécifications de qualité, en ce qui concerne au moins la bande passante ou le délai, sur le trafic par paquet séparément pour chacune desdites applications de client (A, B, C, D), pour un trafic sur des réseaux IP et/ou sur des réseaux X 25, en décidant par le filtrage combien de la bande passante disponible peut être utilisée pour chaque application de client, et **en ce que** ledit filtre de paquet est situé dans la pile de protocole entre la couche IP (25) et la couche avec la porteuse GPRS (21), de sorte que les paquets IP passent le filtre avant la transmission GPRS.

8. Procédé selon la revendication 7, **caractérisé en ce que** des spécifications de qualité différenciées sont assurées sur un trafic sur des réseaux IP et/ou sur des réseaux X. 25.

9. Procédé selon les revendications 7 ou 8, **caractérisé en ce que** ledit filtre de paquet comprend les éléments suivants :
un élément de classement de paquet, qui trie le trafic en fonction des informations dans les paquets transmis,
un compteur, qui pour chacune desdites applications de client enregistre et compare le nombre de paquets transmis, appartenant à ladite application de client, à un profil prédéfini, et
un limiteur de débit, qui limite le flux de paquet pour une application de client à un nombre maximum autorisé de paquets par unité de temps.

10. Procédé selon l'une quelconque des revendications 7 à 9, **caractérisé par** l'affectation dynamique de capacité de transmission entre lesdites applications de client.

11. Procédé selon l'une quelconque des revendications 7 à 10, **caractérisé :**
**en ce que** la quantité de données de chacune desdites applications de client (A, B, C, D) est autorisée à transmettre est limitée,
**en ce que** la capacité de transmission (31), qui est affectée à l'une desdites applications de client, mais n'est pas utilisée, est affectée à une autre quelconque desdites applications de client,
**en ce que** l'utilisateur décide de manière dynamique comment l'utilisation de la bande passante disponible doit être affectée entre lesdites applications de client.

12. Procédé selon l'une quelconque des revendications 7 à 11, **caractérisé par** :
l'identification de paquets à partir desdites applications de client,
l'affectation de bande passante à chacune desdites applications de client, et
la commande d'affectation de capacité de transmission qui n'est pas utilisée momentanément.
